Europäisches Patentamt

European Patent Office

Office européen des brevets

(11) Veröffentlichungsnummer: **0 294 537**
**A1**

## EUROPÄISCHE PATENTANMELDUNG

(21) Anmeldenummer: **88100406.3**

(22) Anmeldetag: **14.01.88**

(51) Int. Cl.⁴: **H02P 3/10**

(30) Priorität: **11.06.87 DE 3719494**

(43) Veröffentlichungstag der Anmeldung:
**14.12.88 Patentblatt 88/50**

(84) Benannte Vertragsstaaten:
**DE FR GB IT SE**

(71) Anmelder: **VDO Adolf Schindling AG**
**Gräfstrasse 103**
**D-6000 Frankfurt/Main(DE)**

(72) Erfinder: **Appel, Hans-Günter**
**Brahmstrasse 4**
**D-6232 Bad Soden(DE)**
Erfinder: **Bluhm, Klaus**
**Frankfurter Strasse 11**
**D-6374 Steinbach/Ts.(DE)**
Erfinder: **Ohm, Heinz-Friedrich**
**Franz-Seliger Strasse 8**
**D-6108 Weiterstadt(DE)**
Erfinder: **Probst, Kurt**
**Altkönigstrasse 19**
**D-6231 Schwalbach(DE)**

(74) Vertreter: **Klein, Thomas, Dipl.-Ing. (FH)**
**Sodener Strasse 9 Postfach 6140**
**D-6231 Schwalbach a. Ts.(DE)**

(54) Verfahren zum Überwachen der Endstellung eines Stellgliedes und Schaltungsanordnung zur Durchführung des Verfahrens.

(57) Das Verfahren zum Überwachen der Endstellungen eines einen Stellmotor (1) aufweisenden Stellgliedes umfaßt das Erkennen der Endstellung z.B. durch Unterbrechen des Stromflusses zum Stellmotor durch Endschalter (4, 5) und die anschließende Beaufschlagung des Stellmotors mit einem Ansteuerimpuls entgegengesetzter Richtung zum Abbremsen des Stellmotors.

Figur 1

# Verfahren zum Überwachen der Endstellung eines Stellgliedes und Schaltungsanordnung zur Durchführung des Verfahrens

Die Erfindung bezieht sich auf Verfahren zum Überwachen der Endstellungen eines einen Stellmotor aufweisenden Stellgliedes, das zur Betätigung einer Verstelleinrichtung, insbesondere zur Steuerung der Motorleistung einer Brennkraftmaschine, dient, bei dem die Ansteuerung des Stellmotors durch eine elektronische Regeleinheit mit einem Prozessor erfolgt, durch die das Stellglied mit einer Folge von Ansteuerimpulsen beaufschlagbar ist. Die Erfindung bezieht sich auch auf eine Schaltungsanordnung zur Durchführung des Verfahrens.

Aus Gründen der Stellgeschwindigkeit muß der Stellmotor mit sehr hoher Drehzahl betrieben werden. Hieraus folgt eine sehr hohe Rotationsenergie des Stellmotors, die große Nachlaufwege bewirkt. Da beispielsweise beim Einsatz eines solchen Stellgliedes zur Steuerung des Motorleistung die Motoransteuerung sehr feinfühlig sein muß, ist eine hohe Auflösung notwendig. Daher muß man den möglichen Verstellbereich fast vollständig für die Ansteuerung ausnutzen und die Nachlaufwege des Stellmotors begrenzen, was durch Anschläge erfolgt. Bedingt durch die hohe Rotations energie des Stellmotors kann es beim Anfahren an einen Anschlag zu einer Zerstörung des Stellgliedes kommen.

Aufgabe der Erfindung ist es, ein universell einsetzbares Stellglied zu schaffen, welches eine feinfühlige Ansteuerung bei hoher Stellgeschwindigkeit, einer großen Stellbereichsauflösung, geringem konstruktiven Aufwand und kleinen Abmessungen sowie bei einem geringen Aufwand für die Überwachung der Endstellungen eine Eigenzerstörung des Stellmotors verhindert.

Diese Aufgabe wird ausgehend von einem Verfahren gemäß Oberbegriff des Anspruchs 1 erfindungsgemäß dadurch gelöst, daß die Ansteuerung des Stellmotors nach Erkennen einer der Endstellungen unterbrochen und der Stellmotor in Gegenrichtung mit einem definierten Ansteuerimpuls bestromt wird.

Durch diese Maßnahme können die Nachlaufwege auf ein Minimum begrenzt werden, wodurch nahezu der gesamte Stellbereich zur Ansteuerung beispielsweise einer Einspritzpumpe einer Brennkraftmaschine zur Verfügung steht, was eine feinfühlige Ansteuerung wegen der hohen Auflösung ermöglicht. Die Gegenbestromung des Stellmotors verhindert ein Anlaufen des Endanschlages mit hoher Rotationsenergie, wodurch eine Eigenzerstörung des Stellmotors bzw. des ihm zugeordneten Getriebes trotz sehr hoher Stellgeschwindigkeit vermieden wird. Aufgrund dieser Eigenschaften ist es möglich, ein solches Stellglied für die unterschiedlichsten Aufgaben, also universell, einzusetzen.

Ein geringer Hardware-Aufwand für die Überwachung der Endstellungen ergibt sich bei Anwendung der nachstehend erläuterten Schaltungsanordnungen.

Eine erste Schaltungsanordnung zur Durchführung des Verfahrens bzw. zum Erkennen der Endstellungen besteht darin, daß in den Stromzuführungsleitungen zu dem Stellmotor zwei durch Endanschläge mechanisch betätigbare Endschalter und parallel zu jedem Schalter jeweils eine Diode angeordnet sind, die jeweils bei in Endstellung geöffnetem, zugeordnetem Endschalter eine Gegenbestromung ermöglichen. Diese Ausgestaltung, die eine Durchführung des Verfahrens zuläßt, ist zwar besonders einfach, doch besteht unter Umständen aufgrund der Anordnung der Endschalter in den Stromzuführungsleitungen die Gefahr eines vorzeitigen Abbrandes der Endschalter.

Diese Gefahr wird durch eine andere Schaltungsanordnung vermieden, die dadurch gekennzeichnet ist, daß zum Erkennen der Endstellungen in einem mit der Reglereinheit in Verbindung stehenden Schaltkreis zwei durch Endanschläge mechanisch betätigbare Endschalter und jeweils parallel hierzu ein Widerstand vorgesehen sind, wobei jeder Widerstand bei geöffnetem, zugeordnetem Schalter einen Spannungsabfall bewirkt, der für die Reglereinheit als Signal für die Gegenbestromung dient. Bei dieser Schaltungsanordnung sind die Stromzuführungsleitungen für den Stellmotor unmittelbar an die sie beaufschlagende Endstufe der Reglereinheit ohne Zuordnung von Endschaltern angeschlossen.

Die Erfindung wird nachstehend anhand zweier in der Zeichnung dargestellter Schaltungsbeispiele näher erläutert.

In der Zeichnung zeigen:

Fig. 1 eine erste Schaltungsanordnung für das Erkennen der Endstellungen des Stellgliedes; und

Fig. 2 eine zweite Schaltungsanordnung für das Erkennen der Endstellungen des Stellgliedes.

Ein Stellmotor 1 eines Stellgliedes, beispielsweise zur Verstellung des Einspritzpumpenhebels einer Brennkraftmaschine ist über Leitungen 2 und 3 an die Endstufe einer Reglereinheit angeschlossen, von der Ansteuerimpulse zur Bestromung des Stellmotors zugeführt werden. Ein Prozessor ist in der Reglereinheit integriert. In den Stromzuführungsleitungen 2 und 3 sind Endschalter 4 und 5 vorgesehen, die über eine mechanische Verbindung 6 bzw. 7 betätigbar sind. Die mechanische Verbindung besteht beispielsweise in einer in der Zeichnung nicht dargestellten Regelstange, deren wirksame Länge durch den Stellmotor 1 zur Einstellung des Stellbereichs veränderbar ist und die mit den Endschaltern 4 und 5 zusammenwirkt. Parallel zu jedem Endschalter ist eine Diode 8 bzw. 9 vorgesehen, die jeweils nach Öffnen des zugeordneten Schalters eine Bestromung des Stellmotors in Gegenrichtung zuläßt, d.h. nach Öffnen eines Schalters dient für die Regler einheit die Unterbrechung des Stromflusses als Signal für das Erkennen des Erreichens einer Endstellung. Hierauf wird der Stellmotor 1 zur Vermeidung eines großen Nachlaufweges über die dem geöffneten Endschalter zugeordnete Diode bestromt, wobei die Stromrichtung nach Öffnen des Schalters der Stromrichtung vor dem Öffnen des Schalters entgegengerichtet ist.

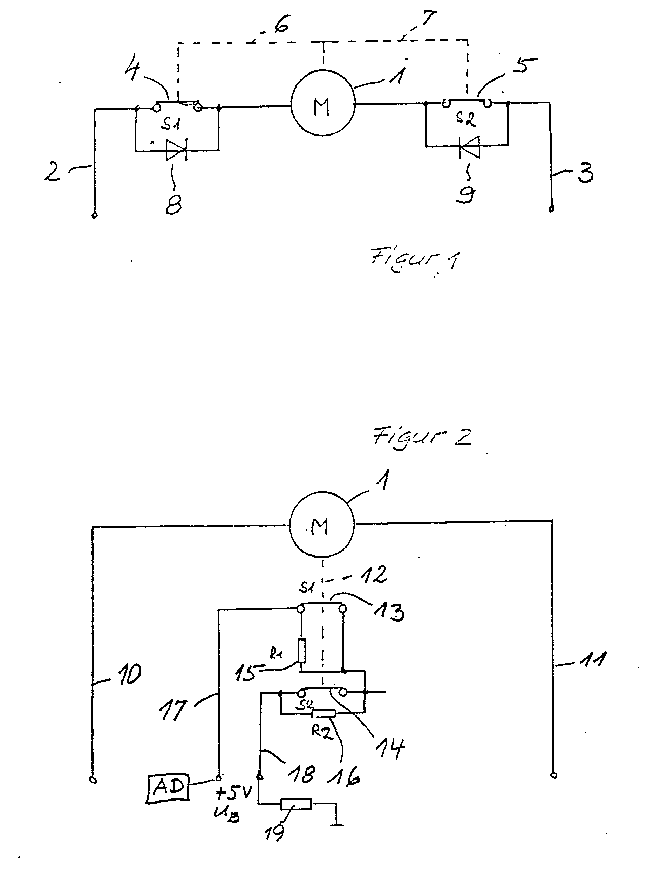

Bei der Schaltungsanordnung nach Fig. 2 steht der Stellmotor 1 über Leitungen 10 und 11 ohne Zwischenschaltung von Endschaltern direkt mit der Endstufe einer Reglereinheit in Verbindung, wobei der Endstufe entsprechende Digitalsignale eines in der Reglereinheit integrierten Prozessors zur Bestromung des Stellmotors 1 zugeführt werden. Über eine mit gestrichelter Linie angedeutete mechanische Verbindung 12, die derjenigen entsprechen kann, die in Verbindung mit Fig. 1 beschrieben wurde, sind Endschalter 13 und 14 beim Erreichen der jeweiligen Endstellung betätigbar. Parallel zu jedem Endschalter ist ein Widerstand 15 bzw. 16 angeordnet. Die aus dem Endschalter 13 und dem zugeordneten Widerstand 15 bzw. dem Endschalter 14 und dem zugeordneten Widerstand 16 gebildeten Spannungsteiler werden über Leitungen 17 und 18 mit einer Betriebsspannung versorgt, wobei die Leitung 17 einerseits an eine Spannungsquelle mit 5 Volt und andererseits an einen Analog/Digital-Wandler der Reglereinheit angeschlossen ist, während die Leitung 18 über einen Widerstand 19 an Masse gelegt ist.

Beim Öffnen einer der Endschalter 13 bzw. 14 fließt der Strom der Spannungsquelle über den zugeordneten Widerstand 15 bzw. 16, woraus sich ein Spannungsabfall ergibt. Dieser Spannungsabfall dient für die Reglereinheit als Signal für das Erkennen der Endstellung, worauf, veranlaßt durch den in der Reglereinheit integrierten Prozessor der Stellmotor 1 mit einem Ansteuerimpuls bestromt wird, der den Ansteuerimpulsen vor dem Öffnen des Schalters, die zum Betrieb des Stellmotors dienen, entgegengerichtet ist. Durch diesen entgegengerichteten Ansteuerimpuls wird der Stellmotor in seiner Endstellung trotz hoher Drehzahl sehr rasch angehalten, was zu einem sehr kurzen Nachlaufweg führt.

## Ansprüche

1. Verfahren zum Überwachen der Endstellungen eines einen Stellmotor aufweisenden Stellgliedes, das zur Betätigung einer Verstelleinrichtung, insbesondere zur Steuerung der Motorleistung einer Brennkraftmaschine, dient, bei dem die Ansteuerung des Stellmotors durch eine elektronische Reglereinheit mit einem Prozessor erfolgt, durch die das Stellglied mit einer Folge von Ansteuerimpulsen beaufschlagbar ist, dadurch **gekennzeichnet,** daß die Ansteuerung des Stellmotors nach Erkennen einer der Endstellungen unterbrochen und der Stellmotor in Gegenrichtung mit einem definierten Ansteuerimpuls bestromt wird.

2. Schaltungsanordnung zur Durchführung des Verfahrens nach Anspruch 1, dadurch **gekennzeichnet,** daß in den Stromzuführungsleitungen (2, 3) zu dem Stellmotor (1) zwei durch Endanschläge mechanisch betätigbare Endschalter (4, 5) und parallel zu jedem Endschalter (4, 5) eine Diode (8, 9) angeordnet sind, die jeweils bei in Endstellung geöffnetem, zugeordnetem Endschalter (4 bzw. 5) eine Gegenbestromung ermöglichen.

3. Schaltungsanordnung zur Durchführung des Verfahrens nach Anspruch 1, dadurch **gekennzeichnet,** daß zum Erkennen der Endstellungen in einem mit der Reglereinheit in Verbindung stehenden Schaltkreis zwei durch Endanschläge mechanisch betätigbare Endschalter (13, 14) und jeweils parallel hierzu ein Widerstand (15, 16) vorgesehen sind, wobei jeder Widerstand (15, 16) bei geöffnetem, zugeordnetem Endschalter (13 bzw. 14) einen Spannungsabfall bewirkt, der für die Reglereinheit als Signal für die Gegenbestromung dient.

Figur 1

Figur 2

Europäisches
Patentamt

EUROPÄISCHER RECHERCHENBERICHT

Nummer der Anmeldung

EP 88 10 0406

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-C- 907 431 (AEG)<br>* Seite 2, Zeilen 11-61; Figur * | 1,2 | H 02 P 3/10 |
| A | | 3 | |
| | --- | | |
| A | PATENT ABSTRACTS OF JAPAN, Band 7, Nr. 45 (E-160)[1190], 23. Februar 1983: & JP - A - 57 196 882 (FUJI DENKI SOUGOU KENKYUSHO K.K.) 02.12.1982<br>* Zusammenfassung; Figur *<br>----- | 1,2 | |

RECHERCHIERTE SACHGEBIETE (Int. Cl.4)

H 02 P 3/00
H 02 P 7/00

Der vorliegende Recherchenbericht wurde für alle Patentansprüche erstellt

| Recherchenort | Abschlußdatum der Recherche | Prüfer |
|---|---|---|
| BERLIN | 24-08-1988 | WEIHS J.A. |